# EUROPEAN PATENT SPECIFICATION

(11) **EP 1 833 328 B1**
(45) Date of publication and mention of the grant of the patent: **24.10.2012**
(21) Application number: 05858008.5
(22) Date of filing: 06.12.2005
(51) Int. Cl.: A47B 43/00, A47B 96/14, E04C 3/32, A47B 9/00, A47B 9/16, A47B 91/02, E04C 3/30

(54) **FOLDABLE SUPPORT ELEMENT**
FALTBARES TRÄGERELEMENT
ÉLÉMENT DE SUPPORT PLIABLE

(30) Priority: 06.12.2004 NO 20045335
(43) Date of publication of application: 19.09.2007
(73) Proprietor: IPI AS, 4095 Stavanger (NO)
(72) Inventor: Urheim, Lars, 4016 Stavanger (NO)
(74) Representative: Miller, James Lionel Woolverton
(86) International application number: PCT/NO2005/000451
(87) International publication number: WO 2006/135242

(56) References cited:
- US-A- 3 921 897
- US-A- 4 678 095
- US-A- 5 878 945
- DATABASE WPI Week 199826, Derwent Publications Ltd., London, GB; Class P25, AN 1998-289949, XP003005544 & JP 10 099 171 A (YOKOBORI K) 21 April 1998

## Description

The present invention relates to a foldable support element in the form of a column with three or more sides, where a number of sides of the support element comprise two corresponding side plates, where one end of the side plate is connected, by means of hinged fastening points, to one end of the side plate, and where the opposite ends of the side plates are each fastened to a rigid base in a plane perpendicular to the longitudinal direction of the support element by means of hinged fastening points.

The invention also relates to a support element for use in folding furniture or temporary constructions in buildings or sites.

### Prior art

Today, several methods exist for folding together or reducing the length of a column. Prior art methods imply that the column comprises elements of a certain length which are placed in parallel, either in that the elements are hinged or are taken apart and placed in parallel, or in that elements of different diameters are fed into each other according to the telescope principle.

US 3921897 discloses a collapsible container.

JP 10099171 describes a construction, where legs are used comprising hinged parts that can be folded together. The leg plates are at the same time hinged to end plates.

The barstool "Dennis" on page 171 in IKEA's catalogue for 2003 is folded together in that the legs, which consist of two U-shaped hoops, are placed in parallel with the seat. The disadvantage of this and other known methods for folding a bench or stool is that to achieve normal or higher sitting heights, the legs are often longer than the diameter of the seat. Thus, one does not achieve optimal reduction of the size of the folded piece of furniture.

Another disadvantage of these methods of temporary reducing the length of a column is that they can never be shorter or less than the length of the longest element.

A further disadvantage with the prior art is that such collapsible constructions often have a tendency to be loose in the joints that hold the construction together and can therefore be rather unsteady.

Therefore, it is an object of the present invention to provide a construction that overcomes the abovementioned disadvantages and other disadvantages, and that is not very space demanding when in a collapsed position.

With the technology according to the invention, a support element can be collapsed so that in the longitudinal direction it is no longer than the thickness of the sidewalls of the support element.

With the technology according to the invention, one achieves that the foot itself, if used in a piece of furniture with a seat, can simply be folded together to an extent where it has a smaller diameter than a normal seat of a bench or a single stool. Thus, the stool or the bench can be folded to a volume that constitutes the plate of the seat multiplied by the thickness of the folded foot.

According to the invention, this is achieved by providing a support element with two or more sides, where each side comprises at least two corresponding side-plates that are fastened to each other at the one end and to a rigid base, which always lies perpendicular to the longitudinal direction of the support elements, at the other end. The rigid base that binds them together constitutes the centre of the structure in folded position. The respective rigid parts constitute an upper part and a lower part in extended position.

The different parts which the support element comprises can be dimensioned, perforated and formed in relation to need of load tolerance consideration, design requirements and need of functional solutions for the support element. The support element can be made in plastic, metal or other suitable material according to requirement for strength, texture or the like.

The foldable support element, according to the present invention, is characterised by the features in the independent claim 1.

Preferred embodiments of the invention are characterised by the features in the dependent claims 2-6.

The invention is also characterised by the use according to claim 7.

### Short description of the figures

The invention shall now be described in more detail with reference to the enclosed figures, in which:
Figure 1 shows an overview of the support element parts.
Figure 2a shows an example of an embodiment of the support element according to the invention in folded position.
Figure 2b shows the support element according to figure 2a in partial extended/folded position.
Figure 2c shows the support element according to figure 2a in fully extended position.
Figures 3a and 3b show a detail of a possible locking method according to the invention for the extended position of the support element.
Figure 4a shows an example of a connection of several support elements according to figure 2 in extended position.
Figure 4b shows an example of a connection of several support elements according to figure 2 in folded position.
Figure 5a shows an embodiment example of the support element according to the invention in extended position.
Figure 5b shows an embodiment example of the support element according to figure 5a in folded position.
Figure 6a shows an example of an embodiment of the support element according to the invention in extended position.
Figure 6b shows the support element according to figure 6a in partially extended/folded position:
Figure 6c shows the support element according to figure 5a in folded position.

### Detailed description of the figures

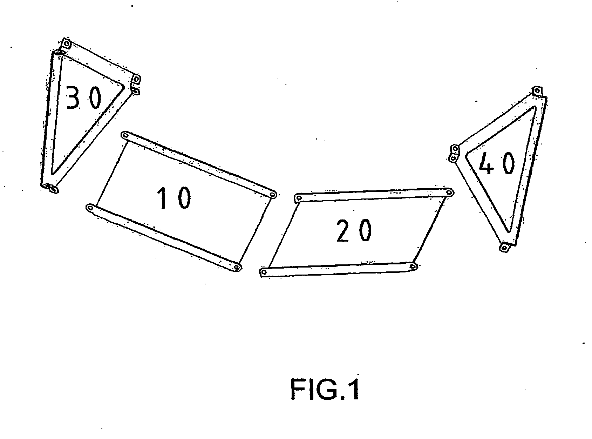

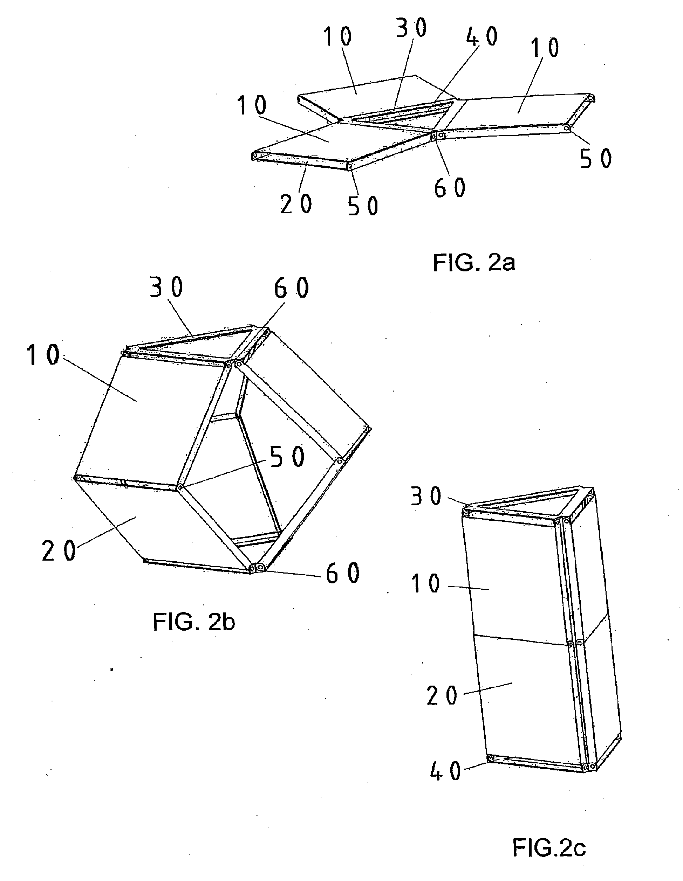

Figure 1 shows an embodiment example of the different parts that can form the basis for the support element in figures 2-4 according to the invention.

Figures 2a-c show an embodiment of the support element according to the invention in folded position and two possible extended positions, respectively. In this embodiment, the support element comprises corresponding sides. The support element comprises three pairs of side plates 10, 20, where the side plates in each pair are fastened to each other by means of hinged fastening points 50, and to their separate rigid bases 30, 40 by means of hinged fastening points 60. The rigid base 30, 40 can represent different functions in relation to application areas. For use in a piece of furniture, the rigid base can be a part of the seat, part of a foot or a tabletop, to mention some examples. Alternatively, the rigid base can represent a frame that is fitted to the mentioned parts.

The two rigid bases 30, 40 comprise, for example, fastening points in each corner. The side edges of the sideplates 10, 20 extend at an angle of 90° in relation to the side plates 10, 20, but it should be noted that the angle can vary, and that the side edges do not have to extend along the whole edge of the side plate, but, can be, for example, present in the area of the hinge only, and will then only be a part of the hinged fastening point.

Each of the different parts are fitted with holes to fasten the respective parts to the support element, in that the side plates 10, 20 comprise two parallel side-edges with holes for fastening the one end of the one side plate 10 to the one end of the other side plate 20, and in that the rigid bases 30,40 comprise an upwardly and downwardly extending edge in each corner with holes for fastening to the other end of the side plate 10, 20 with the help of hole.

In figure 2 the rigid bases 30, 40 have the shape of a triangle, but it shall be noted that the rigid bases 30, 40 can have other forms, such as a square form, pentagon form, circular form, etc.

The shape of the rigid bases therefore defines, in the present example, how many sides the support element has. The side plates 10, 20 are fastened to each of the edges of the rigid bases 30,40 so that a structure is provided which is approximately closed in the circumference of the support element in the whole or part of the longitudinal direction of the support element, and where the rigid base 30, 40 can be arranged up to the perpendicular to the longitudinal direction of the column. The axises of rotation of the hinged fastening points 50, 60 lie in the plane that lies perpendicular to the longitudinal direction to the support elements.

By closed structure, which is approximately closed in the column circumference in whole or parts of the longitudinal direction of the support element, is meant that that the sides do not need to be connected in the full longitudinal direction of the column, i.e. that either side of the side plates 10, 20 can at least adjoin each other only in certain areas in extended position according to figure 2c such as in the areas where the side plates 10, 20 are hinged together.

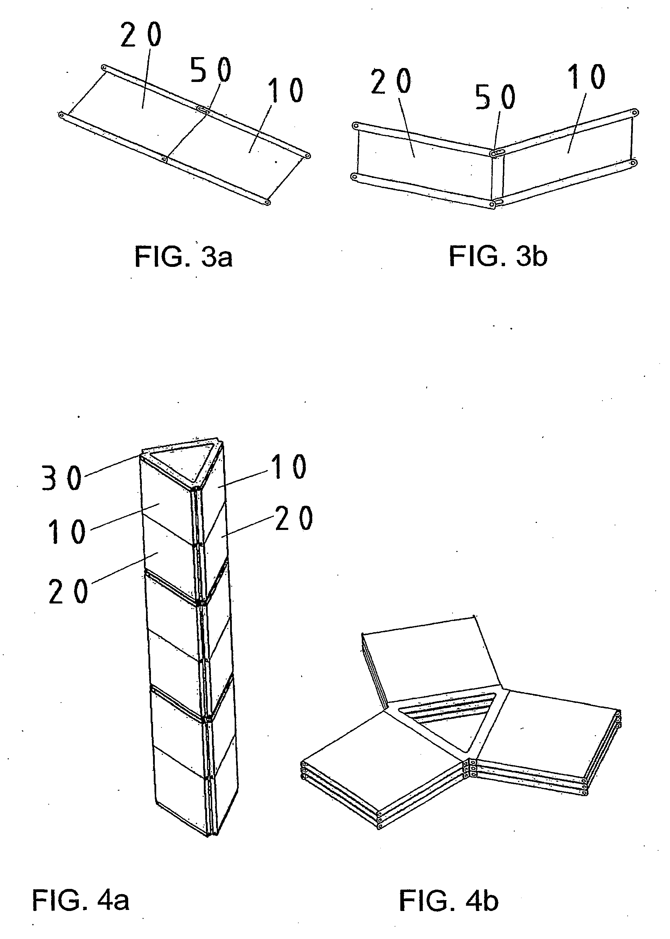

In figures 2 and 4, the rigid bases 30, 40 are formed as triangles and have thereby three of each side plate 10, 20 fastened to one another according to the description above.

It shall be noted that the construction of the support element shall not be limited to that the side plates 10, 20 form a closed structure in the whole or parts of the longitudinal direction of the support element, as the construction can also be applicable in that one or more of the sides do not encompass side plates, but only represent an open area.

The side plates 10, 20 are fastened to each other and to the rigid bases 30, 40 with the help of one or more bolts.

In folded position according to figure 2a, the support element is shaped in the form of a star, where the side plates that the sides of the support element are comprised of, lie at an angle of around 90 degrees in relation to the longitudinal direction of the support element. If one or more of the sides of the construction constitutes an open area instead of side plates 10, 20, the support elements will then constitute a partially star-shaped construction.

The side plates 10, 20 can be made such that they partially or completely go into each other in folded position. In the example according to figures 1 and 2, short bolts are used that only penetrate the material at the two parts they bind together. With the use of through bolts that go from the one side of the side plates 10, 20 to the other side, the side plates 10, 20 will only partially go into each other, as the edges of the side plate 10 will meet the bolt that binds together the side plate 20 with the rigid base 40.

In extended position, as shown in fig.2c, and in folded position, undesired movement of the side plates beyond 0 degrees in relation to the longitudinal direction of the support element in extended position and up to 90 degrees in relation to the longitudinal direction of the support element in folded position, respectively, is prevented in that the end edges of the side plates 10, 20 meet each other in extended position, and that the end edges (against the rigid base 30, 40) meet the side edges of the rigid bases 30 ,40 in folded position.

When the end edges of the side plates 10, 20, which border each other, meet each other the movement of the side plates 10, 20 stops in extended position.

When the side edge of the side plate 10 meets the edge of the rigid base 30 and that the side edge of the side plate 20 meets the rigid base 40, the movement stops in folded position.

Figure 1 and figure 2b show the following: The rigid base 30 is made so that the holes in the plate for the bolt will be able to be positioned concentrically with the holes at the side edges of the side plates 10 on the inside of the side edges. The rigid base 40 is made such that the hole for the bolt in the base will be able to be positioned concentrically with the holes in the side edges of the side plate 20, on the outside of the side edges of the side plate 20.

The rigid base 30 is formed such that the hinged fastening point 60 is orientated according to the profile of the side plate 10 without coming into conflict with the side plate 20 in folded position and that the rigid base 40 is formed such that the hinged fastening point 60 orientates itself according to the profile of the side plate 20 without coming into conflict with the side plate 20 in folded position.

In extended and folded position, it will be possible to lock the position of the support elements by several techniques. Only one of these is described here.

Figures 3a and 3b show the following: In that the fastening point on the side plate 10 is made as an oblong hole with the same radius as the bolt at either end, at the same time as the side edges on the side plate 10 is extended as much as the length of the oblong fastening point, one obtains that the side plates 10, 20 can be locked in extended position. When the side edges of the side plates 10,20 are met, the extended sides of the side plate 10 will lie against the inside of the side plate 20 so that the side plates 10,20 are locked from moving in any other direction than away from each other.

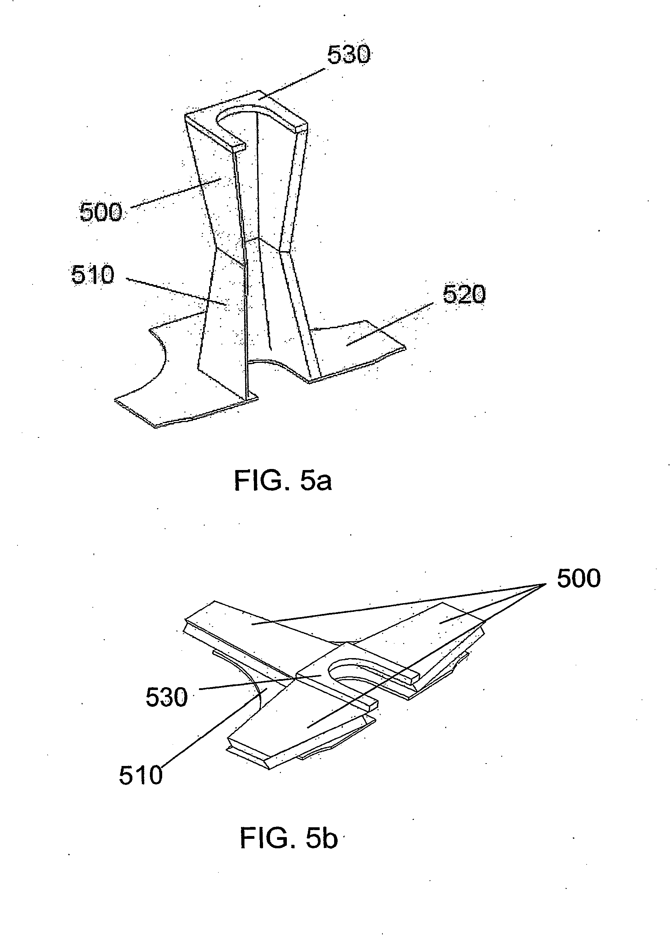

Figs. 4a and 4b show an alternative embodiment of the invention where several support elements according to figure 2 are fitted after each other in the longitudinal direction of the column in an extended position (fig.5a) and in a folded position (fig.5b), respectively. This can be advantageous if there is a need to reduce the area that the support element takes up in folded position without reducing the total length of the support element.

By fitting several support elements after each other, it will be preferential that a rigid base is constructed onto which it is possible to fit side plates in both directions along the longitudinal direction of the support element.

Figures 5a and 5b show an embodiment example of the support element according to the invention, in extended position (fig.5a) and folded position (fig.5b), respectively, comprising three sides that comprise two side plates 500, 510. A rigid base 530 makes up the upper part of the support element and a rigid base 520 makes up the lower part of the support element. The rigid bases 520, 530 constitute, in this example, not a closed structure as one side of the support element does not encompass side plates, but only an open area. The shape of the rigid bases 520, 530 can have several different forms, as the construction of the support element is not dependent on the shape of these.

One embodiment form, which is shown in figure 5, can be advantageous in application areas where it is not desirable that the side plates "extend beyond" the construction in folded position, for example, for use in a table. Another advantage can be if there is a need to feed an object in towards the middle of the column (longitudinal axis) of the support element to influence, move, or in another way treat this object.

The two side plates 500, 510 of the support element according to figure 5 are angled against each other at an angle of less than 180 degrees viewed from the outside of the construction, which is the base for the stability of the construction. This triangular construction is independent of a third side to be able to function if it is dimensioned and constructed to be able to tolerate this.

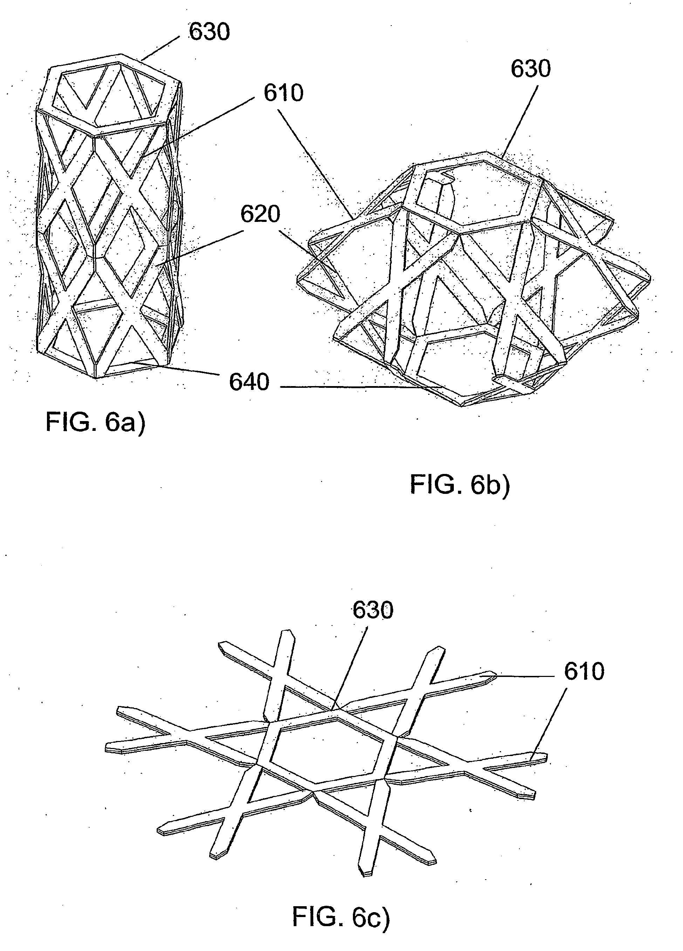

Figure 6 shows an alternative embodiment of the present invention where the different parts of the construction are perforated. Figures 6a and 6b show the support element in two possible extended positions, figure 6b can possibly represent the support element in figure 6a in partially extended/folded position. Figure 6c shows the support element in folded position.

This embodiment of the invention represents an alternatively shaped construction of the support element according to figure 2, in that the side plates encompass a cross alternative to a plane/arch shaped surface and is not described further here. Advantages with such a construction can be that this makes a very high degree of utilisation of the production material possible, in addition to the features of the support element having a purer style.

It shall be pointed out that the side plates are not limited to having a flat surface, but that any arbitrary surface form or surface structure of the side plates is possible, such as an arch―shaped form or other suitable forms.

Other alternative application areas for the support element according to the invention can be appropriate if the support element is dimensioned and adapted for different use, such as within offshore installations, cranes, temporary constructions, permanent towers, to mention but a few.

The support element can also have application characteristics in connection to movements between completely extended and completely folded position, for example, in lifting of different equipment or in chopping trees.

## Claims

1. Foldable support element with three or more sides, wherein each side of the support element comprises two corresponding side plates (10, 20; 500, 510; 610, 620), where one end of the one side plate (10) is connected to one end of the other side plate (20) by means of hinged fastening points (50), and where the opposite ends of the side plates (10, 20; 500, 510; 610, 620) are each fastened to a rigid base (30, 40; 520, 530; 630, 640) in a plane perpendicular to the longitudinal direction of the support element by means of hinged fastening points (60), the parts together forming a structure which is at least approximately closed in circumference of the support element in the entire or parts of the longitudinal direction of the support element, each side plate being arranged to be folded outwards in the hinged fastening points (50) in relation to the longitudinal direction of the support element to a folded position, where the side plates (10, 20; 500, 510; 610, 620) lie up to 90° to the longitudinal direction of the support element, **characterised in that** the side plates (10, 20; 500, 510; 610, 620) are hinged to each other and to the rigid bases (30, 40; 520, 530; 630, 640) with the help of one or more bolts.

2. Foldable support element according to claim 1, **characterised in that** the side plates (10, 20) comprise two parallel side edges with holes for fastening the one end of the one side plate (10) to the one end of the other side plate (20), and that the rigid bases (30,40) comprise an upwardly/downwardly extending edge in each corner with holes for fastening of the other end of each of the side plates (10, 20).

3. Foldable support element according to any one of the preceding claims **characterised in that** the side plates (10, 20) are locked in relation to each other in extended and/or folded position.

4. Foldable support element according to claim 2, **characterised in that** the side plates (10, 20) are locked in extended position **in that** the one side plate (10) is arranged with oblong holes at the hinged fastening point (50), where the radius at each end of the hole corresponds to the radius of the bolt, and that the side edges of the side plates (10) are extended corresponding to the length of the oblong hole, where the extended side edges of the one side plate (10) are arranged on the inside of the other side plate (20).

5. Foldable support element according to claim 4, **characterised in that** the whole of one side edge of the side plates (10, 20) adjoin one another and that the whole of the other side edge of the side plates (10,20) adjoin the rigid base (30,40) in extended position.

6. Foldable support element according to any one of the preceding claims **characterised in that** one or more support elements are connected together in the longitudinal direction of the support element.

7. Application of the support element according to one or more of the preceding claims, in furniture.

## Patentansprüche

1. Faltbares Stützelement mit drei oder mehr Seiten, wobei jede Seite des Stützelements zwei entsprechende Seitenplatten umfasst (10, 20; 500, 510; 610, 620), wobei ein Ende der einen Seitenplatte (10) mit einem Ende der anderen Seitenplatte (20) durch drehbar angebrachte Befestigungspunkte (50) verbunden ist, und wobei die gegenüberliegenden Enden der Seitenplatten (10, 20; 500, 510; 610, 620) beide an eine starre Basis (30, 40; 520, 530; 630, 640) in einer Ebene senkrecht zur Längsrichtung des Stützelements mit Hilfe von drehbar angebrachten Befestigungspunkten (60) befestigt sind, wobei die Teile zusammen eine Struktur bilden, welche in Umfangsrichtung des Einbauelements im Ganzen oder in Teilen der Längsrichtung des Einbauelements mindestens ungefähr geschlossen ist, wobei jede Seitenplatte so angeordnet ist, um nach aussen an den drehbar angebrachten Befestigungspunkten (50) in Bezug auf die Längsrichtung des Einbauelements zu einer gefalteten Position gefaltet zu werden, wobei die Seitenplatten (10, 20; 500, 510; 610, 620) bis zu 90° zur Längsrichtung des Einbauelements liegen, **dadurch gekennzeichnet, dass** die Seitenplatten (10, 20; 500, 510; 610, 620) drehbar gegeneinander und zur starren Basis (30, 40, 520, 530; 630, 640) mit der Hilfe eines oder mehrerer Bolzen angebracht sind.

2. Faltbares Stützelement gemäss Anspruch 1, **dadurch gekennzeichnet, dass** die Seitenplatten (10, 20) zwei parallele Seitenkanten mit Löchern zum Befestigen des einen Endes der einen Seitenplatte (10) an das eine Ende der anderen Seitenplatte (20) umfassen, und dass die starre Basis (30, 40) eine aufwärts/abwärts sich erstreckende Kante in jeder Ecke mit Löchern zur Befestigung des anderen Endes jeder der Seitenplatten (10, 20) umfasst.

3. Faltbares Stützelement gemäss einer der vorhergehenden Ansprüche, **dadurch gekennzeichnet, dass** die Seitenplatten (10, 20) in Bezug zueinander in ausgebreiteter und/oder gefalteter Position verriegelt sind.

4. Faltbares Stützelement gemäss Anspruch 2, **dadurch gekennzeichnet, dass** die Seitenplatten (10, 20) in der ausgefalteten Position verriegelt sind, wobei die eine Seitenplatte (10) mit länglichen Löchern an dem drehbar angebrachten Befestigungspunkt (50) befestigt ist, wobei der Radius an jedem Ende des Loches dem Radius des Bolzens entspricht, und dass die Seitenkanten der Seitenplatten (10) entsprechend der Länge des länglichen Loches ausgebreitet sind, wobei die ausgebreiteten Seitenkanten der einen Seitenplatte (10) im Innern der anderen Seitenplatte angebracht sind (20).

5. Faltbares Stützelement gemäss Anspruch 4, **dadurch gekennzeichnet, dass** das Ganze einer Seitenkante der Seitenplatten (10, 20) jeweils aneinandergrenzen und dass das Ganze der anderen Seitenkante der Seitenplatten (10, 20) an die starre Basis (30, 40) in ausgefalteter Position angrenzt.

6. Faltbares Stützelement gemäss einer der vorhergehenden Ansprüche, **dadurch gekennzeichnet, dass** eine oder mehrere Stützelemente zusammen in Längsrichtung des Stützelementes verbunden sind.

7. Verwendung des Stützelementes in Bezug auf eine oder mehrere der vorhergehenden Ansprüche als Möbelstück.

## Revendications

1. Élément de support pliable avec trois côtés ou plus, où chaque côté de l'élément de support comprend deux plaques latérales correspondantes (10, 20 ; 500, 510 ; 610, 620), où une extrémité de l'une plaque latérale (10) est reliée à une extrémité de l'autre plaque latérale (20) au moyen de points de fixation à charnières (50), et où les extrémités opposées des plaques latérales (10, 20 ; 500, 510 ; 610, 620) sont fixées chacune à une base rigide (30, 40 ; 520, 530 ; 630, 640) dans un plan perpendiculaire à la direction longitudinale de l'élément de support au moyen de points de fixation à charnières (60), où les parties forment ensemble une structure qui est au moins approximativement fermé en périphérie de l'élément de support dans l'entier ou dans des parties de la direction longitudinale de l'élément de support, où chaque plaque latérale est agencée pour être pliée vers l'extérieur dans les points de fixation à charnières (50) par rapport à la direction longitudinale de l'élément de support à une position pliée, où les plaques latérales (10, 20 ; 500, 510 ; 610, 620) se trouvent à 90° par rapport à la direction longitudinale de l'élément de support, **caractérisé en ce que** les plaques latérales (10, 20 ; 500, 510 ; 610, 620) sont articulées les unes aux autres et aux bases rigides (30, 40 ; 520, 530 ; 630, 640) à l'aide d'un ou de plusieurs boulons.

2. Élément de support pliable selon la revendication 1, **caractérisé en ce que** les plaques latérales (10, 20) comprennent deux bords latéraux parallèles avec des trous pour la fixation de l'une extrémité de l'une plaque latérale (10) à l'une extrémité de l'autre plaque latérale (20), et que les bases rigides (30, 40) comprennent un bord s'étendant vers le haut/vers le bas dans chaque coin avec des trous pour la fixation de l'autre extrémité de chacune des plaques latérales (10, 20).

3. Élément de support pliable selon l'une quelconque des revendications précédentes, **caractérisé en ce que** les plaques latérales (10, 20) sont verrouillées l'une par rapport à l'autre en position déployée et/ou en position pliée.

4. Élément de support pliable selon la revendication 2, **caractérisé en ce que** les plaques latérales (10, 20) sont verrouillées en position d'extension, **en ce que** l'une plaque latérale (10) est disposée avec des trous oblongs sur le point de fixation à charnière (50), où le rayon à chaque extrémité du trou correspond au rayon du boulon, et **en ce que** les bords latéraux des plaques latérales (10) sont prolongées correspondant à la longueur du trou oblong, où les bords latéraux prolongés de l'une plaque latérale (10) sont disposées sur la face intérieure de l'autre plaque latérale (20).

5. Élément de support pliable selon la revendication 4, **caractérisé en ce que** l'entier de l'un des bords latéraux des plaques latérales (10, 20) se raccordent entre elles et **en ce que** l'entier de l'autre bord latérale des plaques latérales (10, 20) raccordent à la base rigide (30, 40) en position déployée.

6. Élément de support pliable selon l'une quelconque une des revendications précédentes, **caractérisé en ce que** l'un ou plusieurs éléments de support sont reliés entre eux dans la direction longitudinale de l'élément de support.

7. Utilisation de l'élément de support selon l'une ou plusieurs des revendications précédentes dans un meuble.
